# EUROPÄISCHE PATENTSCHRIFT

(11) **EP 1 281 845 B1**
(45) Veröffentlichungstag und Bekanntmachung des Hinweises auf die Patenterteilung: **21.02.2007**
(21) Anmeldenummer: 02015862.2
(22) Anmeldetag: 16.07.2002
(51) Int. Cl.: F02B 29/02, F02B 27/02, F02D 9/08, F16K 1/12

(54) **In einem Einlasskanal einer Kolbenbrennkraftmaschine angeordnete Zusatzsteuerventileinrichtung**
Additional control valve in the intake pipe of an internal combustion engine
Soupape de commande additionnelle dans le conduit d'admission d'un moteur à combustion interne

(30) Priorität: 02.08.2001 DE 10137828
(43) Veröffentlichungstag der Anmeldung: 05.02.2003
(73) Patentinhaber: META MOTOREN- UND ENERGIE-TECHNIK GMBH, D-52134 Herzogenrath (DE)
(72) Erfinder: Kreuter, Peter, Dr. Ing., 52072 Aachen (DE)
(74) Vertreter: Kramer - Barske - Schmidtchen

(56) Entgegenhaltungen:
- DE-A- 19 908 435
- FR-A- 1 015 012
- GB-A- 430 164
- US-A- 2 809 660
- US-A- 3 119 405

## Beschreibung

Die Erfindung betrifft eine in einem Einlasskanal einer Kolbenbrennkraftmaschine angeordnete Zusatzsteuerventileinrichtung.

Aus der DE 199 08 435 ist eine in einem Einlasskanal einer Kolbenbrennkraftmaschine angeordnete Zusatzsteuerventileinrichtung bekannt, die zur Impulsaufladung der Brennkraftmaschine verwendet wird. Bei einer solchen Impulsaufladung bleibt die stromoberhalb eines herkömmlichen Einlassventils der Brennkraftmaschine angeordnete Zusatzsteuerventileinrichtung während des Ansaughubs des Kolbens bei offenem Einlassventil dicht geschlossen, so dass sich stromabwärts des Zusatzventils ein hoher Unterdruck aufbaut. Wird das Zusatzventil dann geöffnet, so erhält die einströmende Frischladung aufgrund des Unterdrucks einen hohen Impuls, wodurch die Füllung des Brennraums erhöht wird und ein größeres Drehmoment erzielbar ist als ohne Impulsaufladung.

In der DE 43 14 809 A1,von der im Oberbegriff des Hauptanspruchs der vorliegenden Anmeldung ausgegangen wird, ist ein im Einlasskanal angeordnetes Rückschlagventil beschrieben, das erforderlichenfalls auch mit Fremdkraft betätigt werden kann. Das Ventilglied ist beispielsweise ein im Querschnitt dreieckiger Dichtkörper, der über einen Schaft an einer im Einlasskanal vorgesehenenalterung beweglich geführt ist. Es kann lediglich durch Differenzdruck betätigt werden oder beispielsweise mittels einer Stelleinrichtung, beispielsweise einem Servomotor. Die Stelleinrichtung kann ein mechanisches Gestänge aufweisen, das von außen in den Einlasskanal einragt. Das Ventilglied kann als ein Kegelstumpf ausgebildet sein, dessen abgeflachte Spitze eingezogen ist. Das Ventilglied kann mittels eines Elektromagneten oder einer Gasfeder betätigt werden. Eine Eigenart der Ventile gemäß der vorgenannten Druckschrift liegt darin, dass sie zu deutlichen Wirbelbildungen führen und den Strömungswiderstand der Strömung durch den Einlasskanal vergrößern.

Die DE 611 659 C1 zeigt einen in einem Schalldämpfer angeordneten stromlinienförmigen Drehkörper, durch dessen Gesamtverschiebung der Durchschnittsquerschnitt eines Ringspaltes veränderbar ist.

Der Erfindung liegt die Aufgabe zugrunde, eine in einem Einlaßkanal einer Kolbenbrennkraftmaschine angeordnete Zusatzsteuerventileinrichtung zu schaffen, mit der bei einfachem Aufbau die aus der Praxis gestellten Forderungen hinsichtlich geringer Beeinflussung des Strömungswiderstandes und rascher und mit dem Verbrauch von nur wenig Energie verbundener Betätigbarkeit erfüllt werden.

Diese Aufgabe wird mit den Merkmalen des Anspruchs 1 gelöst.

In seiner Offenstellung bewirkt das Zusatzsteuerventil praktisch keine Erhöhung des Strömungswiderstandes des Einlasskanals, da die Oberfläche des Ventilgliedes in dessen Offenstellung bündig mit der restlichen Oberfläche des Strömungskörpers verläuft.

Mit den Merkmalen des Anspruchs 2 wird der Strömungskörper in vorteilhafter Weise weitergebildet.

Mit den Merkmalen des Anspruchs 3 wird erreicht, dass die Zusatzsteuerventileinrichtung in einfacher Weise im Einlasskanal untergebracht werden kann, wobei zur Betätigung des Ventilgliedes lediglich ein elektrischer oder ggf. pneumatischer oder hydraulischer Anschluß an den Strömungskörper erforderlich ist.

Mit den Merkmalen des Anspruchs 4 wird eine sehr rasche und energetisch günstige Betätigbarkeit des Ventilglieds erreicht.

Die Ansprüche 5 bis 12 kennzeichnen vorteilhafte Ausführungsformen und Weiterbildungen der erfindungsgemäßen Zusatzsteuerventileinrichtung.

Die erfindungsgemäße Zusatzsteuerventileinrichtung kann sowohl zur Impulsaufladung verwendet werden als auch derart ausgebildet werden, dass bei Ottomotoren ein Betrieb ohne Drosselklappe möglich ist. Weiter sind mit der Zusatzsteuerventileinrichtung zusätzliche Freiheitsgrade bezüglich anderer Arten der Ladungswechselsteuerung gegeben.

Die Erfindung wird im folgenden anhand schematischer Zeichnungen beispielsweise und mit weiteren Einzelheiten erläutert.

Es stellen dar:
Fig. 1 eine schematische Ansicht eines Zylinders einer Hubkolbenbrennkraftmaschine mit einigen Bauteilen des Einlasssystems,
Fig. 2 einen Längsschnitt durch eine erste Ausführungsform einer erfindungsgemäßen Zusatzsteuerventileinrichtung,
Fig. 3 einen Längsschnitt durch eine zweite Ausführungsform einer erfindungsgemäßen Zusatzsteuerventileinrichtung,
Fig. 4 einen Längsschnitt durch eine weitere Ausführungsform einer erfindungsgemäßen Zusatzsteuerventileinrichtung, und
Fig. 5 einen Längsschnitt durch eine andere Ausführungsform einer erfindungsgemäßen Zusatzventilsteuereinrichtung.

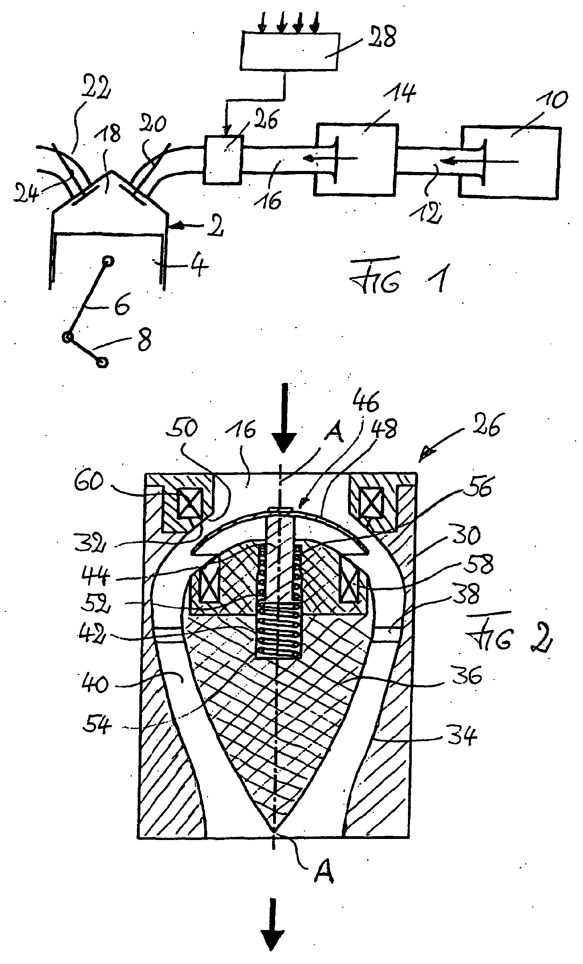

Gemäß Fig. 1 weist eine Hubkolbenbrennkraftmaschine mehrere Zylinder 2 auf, in denen je ein Kolben 4 arbeitet, der über ein Pleuel 6 mit einer Kurbelwelle 8 verbunden ist. Die Frischluft- bzw. Frischladungszufuhr zu dem Zylinder 2 erfolgt durch ein Luftfilter 10 hindurch, das über eine Zufuhrleitung 12 mit einem Luftsammler 14 verbunden ist, von dem aus einzelne, jeweils einen Einlasskanal 16 bildende Schwingrohre in den Brennraum 18 des Zylinders 2 führen. In der Mündung jedes Schwingrohres bzw. Einlasskanals 16 in den Brennraum 18 ist wenigstens ein Einlassventil 20 angeordnet. In der Öffnung des Brennraums in einen Auslasskanal 22 hinein arbeitet wenigstens ein Auslassventil 24. Die Ausbildung des Ansaugsystems mit Schwingrohren ist vorteilhaft, jedoch nicht zwingend.

In dem Einlasskanal 16 ist stromoberhalb des Einlassventils 20 eine Zusatzsteuerventileinrichtung 26 vorgesehen, deren Zusatzsteuerventil von einem Steuergerät 28 gesteuert wird.

Die Wirkungsweise der beschriebenen Anordnung einschließlich der Gemischaulbereitung, usw., ist an sich bekannt und wird daher nicht im einzelnen erläutert.

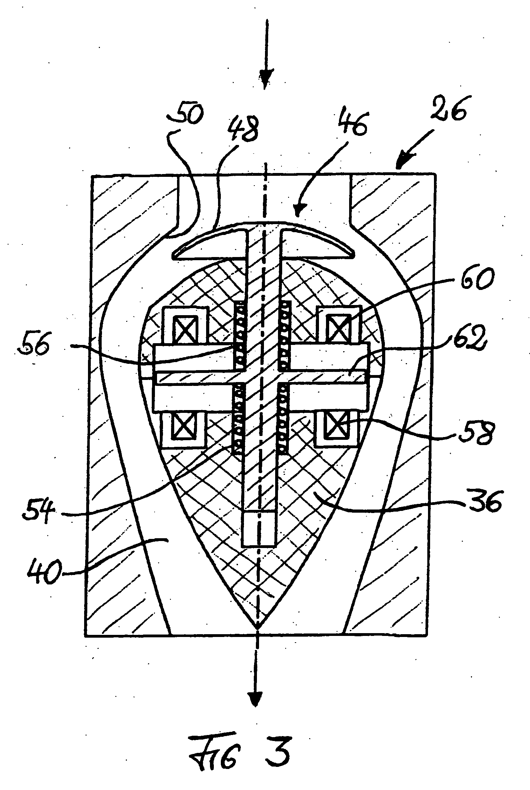

Fig. 2 zeigt einen Längsschnitt durch die Zusatzsteuerventileinrichtung 26 der Fig. 1. Die durch Pfeile verdeutlichte Luft- bzw. Frischladungsströmungsrichtung ist in Fig. 2 von oben nach unten.

Wie ersichtlich, erweitert sich der Einlasskanal 16 am strömungsaufwärtigen Ende der Zusatzsteuerventileinrichtung 26, indem die Innenwand des Einlasskanalkörpers 30 einen sich konisch erweiternden Bereich 32 aufweist. Der Erweiterungsbereich 32 geht über eine breiteste Stelle in einen sich verjüngenden Bereich 34 über, der schließlich glatt in den nicht dargestellten zum Einlassventil führenden Teil des Einlasskanals 16 übergeht.

In dem Erweiterungsbereich 32 und dem sich anschließenden Verjüngungsbereich 34 ist ein insgesamt stromlinienförmiger Strömungskörper 36 angeordnet, der mittels Halterungen 38, die ebenfalls strömungsgünstig ausgebildet sind, in dem Einlasskanalkörper 30 gehalten ist.

Der Strömungskörper 36 ist der Innenwandung des Einlasskanalkörpers 30 entsprechend ausgebildet, so dass zwischen ihm und dem Einlasskanalkörper 30 ein Ringspalt 40 mit ringförmigem Durchströmquerschnitt gebildet ist. Der Strömungsquerschnitt des Ringspaltes kann in Strömungsrichtung , wie bei hydraulischen oder aerodynamischen Einrichtungen bekannt, zunächst abnehmen und dann langsam wieder zunehmen.

An seinem stromaufwärtigen Ende weist der Strömungskörper 36 ein Sackloch 42 auf, das koaxial mit der Achse A-A der Strömung bzw. der gesamten Anordnung ausgebildet ist. In dem Sackloch ist der Schaft 44 eines insgesamt pilzförmigen Ventilgliedes 46 beweglich geführt, wobei der am Schaft 44 befestigte Hut 48 des Ventilglieds 46 derart geformt und die Konturen des Erweiterungsbereiches 32 und des Strömungskörpers 36 an ihn angepasst sind, dass der Hut 48 in einer gemäß Fig. 2 oberen Schließstellung dichtend an einem inneren, einen Ventilsitz 50 bildenden Bereich des Erweiterungsbereiches 32 anliegt und in einer unteren Offenstellung bündig mit der Außenkontur des Strömungskörpers 36 verläuft, der dem Hut 48 entsprechend ausgenommen ist. Wie ersichtlich, ist der Hut 48 zu der vom Einlassventil 20 abgewandten Seite hin konvex mit einem Scheitelpunkt in der Achse A-A.

Der Schaft 44 endet in einem Bund 52. Zwischen dem Bund 52 und dem Boden des Sackloches 42 stützt sich eine erste Feder 54 ab. Zwischen dem Bund 52 und einem am oberen Ende des Sackloches 42 ausgebildeten Bund stützt sich eine weitere Feder 56 ab. Auf diese Weise bildet das Ventilglied 46 zusammen mit den beiden Federn 54 und 56 ein schwingungsfähiges System, welches von den Federn in einer Mittellage gehalten wird. Die Eigenfrequenz des schwingungsfähigen Systems ist durch die Federkonstanten und das Gewicht des Ventilgliedes 46 gegeben.

Zur Montierbarkeit des Ventilgliedes und der Federn ist der Strömungskörper 36 insgesamt zweiteilig aufgebaut, wobei der Oberteil und der Unterteil auf jedwelche geeignete Weise miteinander verbindbar sind.

Im Oberteil des Strömungskörpers 36 ist ein ringförmiger Elektromagnet 58 angeordnet, dessen Polfläche frei liegt und mit dem aus magnetischem Material bestehenden Hut 48 zusammenwirkt. Im Einlasskanalkörper 30 ist im Bereich des Ventilsitzes 50 ein weiterer Ringmagnet 60 angeordnet, dessen Polfläche ebenfalls mit dem Hut 48 zusammenwirkt. Die elektrischen Anschlussleitungen der Ringmagnete 58 und 60, die mit dem Steuergerät 28 verbunden sind, sind nicht dargestellt.

Die Funktion der beschriebenen Zusatzsteuerventileinrichtung 26 ist folgende:

Bei Erregung des Ringmagneten 58 wird das Ventilglied 46 mit dem Hut 48, gegebenenfalls unterstützt durch die Luftströmung, aus der dargestellten Mittelstellung gegen die Kraft der Feder 54 in die Offenstellung gezogen, in der der Hut 48 an der Polfläche des Ringmagneten 58 anliegt. Wird der Ringmagnet 58 deaktiviert, so schwingt das Ventilglied unter dem Einfluss der Federn 54 und 56 in Richtung auf die Schließstellung, in der es durch abgestimmte Erregung des Ringmagneten 60 unter Anlage des Hutes 48 an dem Ventilsitz 50 gehalten wird. Wird der Magnet 60 deaktiviert, so bewegt sich das Ventilglied durch die Kraft der Federn in die Offenstellung, in der es mit Hilfe des Magneten 58 gehalten wird, usw.. Die Eigenfrequenz des schwingfähigen Systems ist vorteilhafterweise höher als die Frequenz, mit der das Ventil betätigt werden muss, so dass ein außerordentlich rascher Wechsel zwischen Offen- und Schließstellung möglich ist, wobei von den Magneten jeweils nur die Haltekraft aufgebracht werden muss und die kinetische Energie in den Federn gespeichert wird.

Zur Dämpfung der Auftreffbewegung des Hutes auf den Strömungskörper 36 und den Ventilsitz können die jeweiligen Anlageflächen entsprechend ausgebildet sein, so dass bei der Anlage jeweils ein Luftpolster verdrängt werden muss.

Bei Verwendung zur Impulsaufladung für ein hohes Drehmoment bereits bei niedrigen Drehzahlen bleibt das Zusatzsteuerventil während des Ansaughubs bei offenem Einlassventil geschlossen und wird bei weiterhin offenem Einlassventil geöffnet, wenn sich ein hoher Unterdruck aufgebaut hat. Frischladung strömt mit hoher Energie und entsprechend guter Füllung in den Brennraum, dessen Einlassventil geschlossen wird, bevor eine Rückströmung entsteht. Das Zusatzventil wird geschlossen und steht für einen neuen Ansaugzyklus zur Verfügung. Bei fehlender Drosselklappe wird das Zusatzsteuerventil in Abstimmung mit dem Einlassventil derart betätigt, dass bei einem Ansaughub nur eine vorbestimmte kleine Menge Frischladung in den Brennraum gelangt.

Die erfindungsgemäße Zusatzsteuerventileinrichtung hat zahlreiche Vorteile:
- Sie ist insgesamt rotationssymmetrisch aufgebaut, was die Produktionskosten vermindert.
- Sie ist strömungsgünstig, wodurch kaum Strömungs- oder Wirbelverluste entstehen, wodurch der Wirkungsgrad einer Impulsaufladung entscheidend verbessert wird.
- Sie benötigt nur wenig elektrische Energie, da die jeweils erforderliche kinetische Energie in den Federn gespeichert wird.
   Die Öffnung des Ventils ist außerordentlich rasch, da sie durch den Unterdruck bzw. die dann einsetzende Strömung unterstützt wird.
- In Schließstellung wird eine zuverlässige gasdichte Abdichtung erreicht.
- Die Ruhe- bzw. Mittelstellung kann in einfacher Weise dadurch verändert werden, dass der Fußpunkt der Feder 54 mittels einer nicht dargestellten, in den Strömungskörper 36 eingeschraubten Einstellschraube verändert wird.
- Das insgesamt einen Anker bildende Ventilglied kann bei minimaler Masse mit guten magnetischen Eigenschaften ausgebildet werden, indem für den Hut 48 radial unterschiedliche Wandstärken mit Verdickung im magnetischen Wirkbereich und Verjüngung im nichtmagnetischen Bereich verwendet werden. Weiter ist es möglich, einen magnetischen Werkstoff im magnetischen Wirkbereich mit einem mechanisch hochfesten Werkstoff, beispielsweise einem Verbundwerkstoff, mit niedriger spezifischer Masse zu verbinden.
- Durch die glockenförmige Ausbildung des Hutes weist dieser eine hohe Strukturfestigkeit bei gleichzeitig günstiger Strömungsform auf. Durch den hutförmigen Anker weist der Anker eine gewisse Elastizität auf, wobei die Führung des Schaftes 44 zusätzlich ein gewisses Spiel aufweisen kann, so dass das Ventilglied selbst zentrierend ist, Toleranzen ausgeglichen werden und niedrige Auftreffgeräusche entstehen.
- Die beschriebene Zusatzsteuerventileinrichtung ist als Modul herstellbar und in vorhandene Einlasskanäle in einfacher Weise nachrüstbar.
- Infolge der raschen Ansteuerbarkeit des Ventilgliedes ist es möglich, die erfindungsgemäße Zusatzsteuerventileinrichtung nicht nur für eine Impulsaufladung zu verwenden, sondern auch anstelle einer Drosselklappe einzusetzen, wodurch Kosten gespart werden und Verbrauchsreduzierungen möglich sind.

Der Winkel, den der Ventilsitz mit der Mittelachse bildet, ist auf die Abdichtung und die Strömung abgestimmt und liegt beispielsweise bei 45°.

Vorteilhaft ist weiter, wenn die beiden Ringmagnete 58 und 60 annähernd gleiche radiale Durchmesser haben, so dass sich deren Polflächen etwa gegenüber liegen. Damit werden kurze Feldlinien im Anker erzielt und es ist eine geringe Ankermasse möglich. Durch die Düsen- bzw. Diffusorströmung im Ringspalt 40 kann eine gezielte Geschwindigkeitsüberhöhung bzw. -verzögerung erzielt werden, wodurch insgesamt minimale Strömungsverluste entstehen.

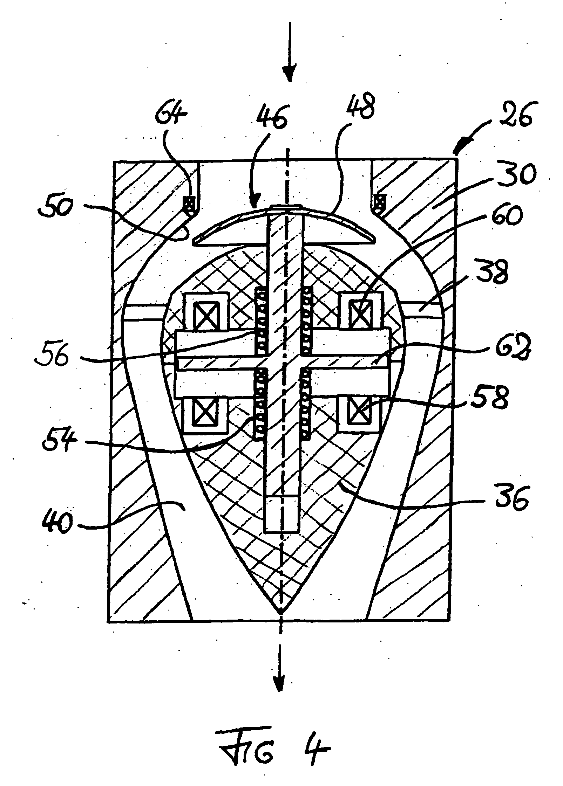

Fig. 3 zeigt eine gegenüber Fig. 2 abgeänderte Ausführungsform einer Zusatzsteuerventileinrichtung 26, bei der der Bund 52 der Ausführungsform gemäß Fig. 2 zu einer Ankerplatte 62 erweitert ist und die Ringmagneten 58 und 60 innerhalb des Strömungskörpers 36 aufgenommen sind. Ansonsten entspricht die Funktion der Ausführungsform gemäß Fig. 3 der der Fig. 2. Da bei der Ausführungsform gemäß Fig. 3 die Schließstellung des Ventilglieds 46 nicht dadurch definiert ist, dass der Hut 48 unmittelbar durch Magnetkraft in Anlage an dem Ventilsitz 50 gehalten ist, sondern dadurch, dass die Ankerplatte 62 von dem Ringmagneten 60 gehalten wird, ist es vorteilhaft, zum Ausgleich von Toleranzen den Hut 48 etwas elastischer auszubilden, was dadurch möglich ist, dass der Hut 48 nicht aus magnetischem Material bestehen muss.

Ansonsten werden mit der Ausführungsform gemäß Fig. 3 die gleichen Vorteile erzielt wie mit der der Fig. 2. Da der Winkel des Ventilsitzes 50, der den Winkel definiert, unter dem die Frischladung in den Ringspalt 40 einströmt, nicht auf magnetische Haltekräfte abgestimmt werden muss, sondern vorwiegend unter Strömungsgesichtspunkten festgelegt werden kann, kann der Winkel etwas größer sein und 50 Grad betragen.

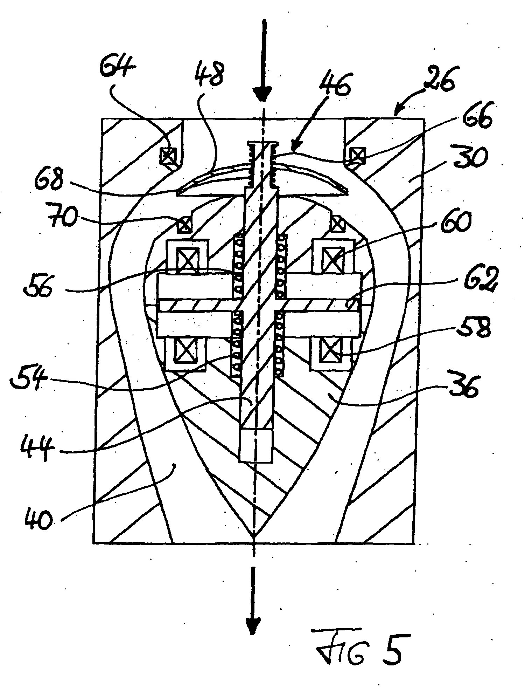

Fig. 4 zeigt eine gegenüber Fig. 3 abgeänderte Ausführungsform der Zusatzsteuerventileinrichtung 26, die Merkmale der Ausführungsform gemäß Fig. 3 mit denen der Fig. 2 vereint, indem zusätzlich zu den Ringmagneten 58 und 60 der Fig. 3 im Bereich des Ventilsitzes 50 im Einlasskanalkörper 30 ein zusätzlicher Ringmagnet 64 angeordnet ist, der den in diesem Fall ebenfalls zumindest teilweise aus magnetisierbarem Material bestehenden Hut 48 unmittelbar in Anlage an den Ventilsitz 50 drängt. Der Ringmagnet 60 dient zum Einfangen und Halten der Ankerplatte 62 in Schließstellung. Der zusätzliche Ringmagnet 64 dient zum Einfangen und Halten des Hutes 48 in dichtender Anlage am Ventilsitz 50.

Fig. 5 zeigt eine weitere Ausführungsform einer Zusatzventileinrichtung, die gegenüber der der Fig. 3 abgeändert ist. Bei dieser Ausführungsform ist der Hut 48 beweglich am Schaft 44 geführt und wird von zwei Federn 66 und 68, die sich gegensinnig zwischen dem Hut 48 und dem Schaft 44 abstützen in eine Mittelstellung vorgespannt, sodass der Hut mit den Federn ein gegenüber dem Schaft schwingungsfähiges System bildet. Ähnlich wie der Ringmagnet 64 der Fig. 4 ist im Einlasskanalkörper 30 ein Ringmagnet 64 angeordnet. Ein weiterer Ringmagnet 70 ist im Strömungskörper 36 angeordnet. Die Ringmagnete 64 und 70 bilden bevorzugt reine Haltemagnete zum Halten des Hutes 48 in dessen Offen- oder Schließstellung, während die Magnete 58 und 60 Fangmagnete für die Ankerplatte 62 bilden. Entsprechend können die Magnete 64 und 70 schwächer dimensioniert werden. Mit der Ausführungsform gem. Fig. 5 wird der Vorteil kürzerer Schaltzeiten zwischen Offen- und Schließstellung des Ventils erzielt. Sei angenommen, das Ventil befinde sich in Schließstellung, d.h. der Hut 48 in Anlage am erregten Ringmagneten 64 und die Ankerplatte 62 in Anlage am erregten Ringmagneten 60. Wenn das Ventil dann umgeschaltet werden soll, wird der Magnet 60 deaktiviert und der Magnet 58 aktiviert, sodass sich die Ankerplatte 62 unter Wirkung der Federn 54, 56 in Anlage an den Ringmagneten 58 bewegt und dort gehalten wird. Der Haltemagnet 64 bleibt zunächst erregt, sodass der Hut 48 in Schließstellung bleibt, wobei sich der Schaft 44 unter Verformung der Federn 66, 68 relativ zum Hut 48 gem. Fig. 5 nach unten bewegt. Wird der Magnet 64 dann, beispielsweise kurz bevor die Ankerplatte ihre untere Position erreicht, deaktiviert, so bewegt sich der von den Federn 66 und 68 vorgespannte Hut 48 beschleunigt in Anlage an den Magneten 70 und wird in Offenstellung gehalten. Die effektive Schaltdauer des Ventils, die durch die Zeitdauer gegeben ist, die von dem Hut zur Bewegung von der Schließ- in die Offenstellung und umgekehrt benötigt wird, ist verkürzt, wodurch Ladungswechselverluste vermindert sind und eine präzisere Steuerung möglich ist. Durch die gegenüber der Deaktivierung des jeweiligen Fangmagneten 60 bzw. 58 verzögerte Deaktivierung des jeweiligen Haltemagneten 64 bzw. 70 wird im Schwingsystem 48, 66, 68 Energie gespeichert, die dann für eine beschleunigte Bewegung des Hutes genutzt wird. Es versteht sich, dass die Mittelstellung des Hutes vorteilhafterweise derart auf die Stellungen der Ankerplatte abgestimmt ist, dass der Hut auch ohne Aktivierung der Magnete 64, 70 in sicherer Anlage an deren Polflächen bzw. in Schließ- oder Offenstellung ist.

Die geschilderte Zusatzsteuerventileinrichtung kann in vielfältiger Weise abgeändert werden: Die als Haltemagnete wirksamen Magnete 64 und 70 der Ausführungsform gem. Fig. 5 sowie der Haltemagnet 64 der Fig. 4 können durch Permanentmagnete gebildet sein, deren Stärke auf die Federn und die Fangmagnete abgestimmt ist, sodass die Haltemagnete die Bewegung des Hutes 48 jeweils in geeigneter Weise freigeben. Das Ventilglied muss nicht zwingend Bestandteil eines schwingfähigen Systems sein. Die Betätigung des Ventilgliedes kann hydraulisch, pneumatisch oder sonstwie erfolgen, indem beispielsweise durch die Halterungen 38 (Fig. 2) entsprechende Zuleitungen durchgeführt sind. Der Boden des Sackloches 42 kann in unterschiedlichster Weise entlüftet sein und der Schaft kann entsprechend dem Sackloch mit abgestuften Querschnitten ausgebildet sein, so dass sich die Bewegung des Ventilglieds in unterschiedlichster Weise vor dem Erreichen der Offen- oder Schließstellung dämpfen läßt. Die Anordnung der Fig. 5 kann auch ohne die Magnete 64 und 70 zum Toleranzausgleich verwendet werden. Merkmale der verschiedenen Ausführungsformen können in unterschiedlicher Weise miteinander kombiniert werden.

## Patentansprüche

1. Zusatzsteuerventileinrichtung angeordnet in einem Einlaßkanal einer Kolbenbrennkraftmaschine, enthaltend:
einen sich in Strömungsrichtung erweiternden und nach einer breitesten Stelle verjüngenden Bereich (32, 34) des Einlaßkanals (16), wobei der Anfangsbereich des Erweiterungsbereiches einen Ventilsitz (50) bildet,
einen in dem sich erweiternden und dann verjüngernden Bereich derart gehaltenen Körper (36), daß zwischen dem Körper und dem sich erweiternden und dem sich verjüngenden, Bereich ein ringförmiger Durchströmquerschnitt (40) ausgebildet ist und
ein in dem Körper etwa koaxial zur Strömungsrichtung beweglich geführtes Ventilglied (46), das in Offenstellung einen der Strömung zugewandten Bereich der Oberfläche des Körpers bildet und in Schließstellung am Ventilsitz anliegt,
**dadurch gekennzeichnet, daß**
der Körper als stromlinienförmiger Strömungskörper (36) ausgebildet ist, dessen Querschnitt auf dem des sich erweiternden und sich verjüngenden Bereiches (32, 34) derart abgestimmt ist, daß der ringförmige Durchströmquerschnitt sich in Strömungsrichtung nicht sprunghaft ändert und daß das Ventilglied (46) in Offenstellung bündig mit der Oberfläche des. Strömungskörpers verläuft.

2. Zusatzsteuerventileinrichtung nach Anspruch 1 **dadurch gekennzeichnet, daß** der Strömungskörper (36) im Bereich des sich verjüngenden Bereiches (34) des Einlaßkanal (16) in einer Spitze ausläuft.

3. Zusatzsteuerventileinrichtung nach Anspruch 1 oder 2, **dadurch gekennzeichnet, dass** eine Betätigungseinrichtung (52,54,56,58,60,62) für das Ventilglied (46) in den Strömungskörper (36) integriert ist.

4. Zusatzsteuerventileinrichtung nach einem der Ansprüche 1 bis 3, **dadurch gekennzeichnet, daß** das Ventilglied (46) durch Federkraft beidseitig in eine Mittelstellung derart vorgespannt ist, daß es zwischen der Offen- und der Schließstellung schwingfähig ist, wobei das Ventilglied durch Magnetkraft in der Offen- und Schließstellung gehalten ist.

5. Zusatzsteuerventileinrichtung nach einem der Ansprüche 1 bis 4, wobei das Ventilglied (46) insgesamt pilzförmig ist und einen in dem Strömungskörper (36) geführten Schaft (44) und einen Hut (48) aufweist, dessen konvexe Außenseite in Schließstellung am Ventilsitz (50) anliegt und in Offenstellung einen Teil der Oberfläche des Strömungskörpers (36) bildet.

6. Zusatzsteuerventileinrichtung nach Anspruch 5, wobei an dem Schaft (44) ein Bund (52) ausgebildet ist, und an jeder Seite des Bundes eine Feder (54, 56) angeordnet ist, die sich an dem Bund und dem Strömungskörper abstützt.

7. Zusatzsteuerventileinrichtung nach Anspruch 6, wobei der Hut (48) des pilzförmigen Ventilglieds (46) mittels eines in einem an den Ventilsitz (50) angrenzenden Bereich des Einlasskanalkörpers (30) angeordneten Elektromagneten (60) in Anlage am Ventilsitz und mittels eines im stromaufwärtigen Endbereich des Strömungskörpers (36) angeordneten Elektromagneten (58) in Offenstellung haltbar ist.

8. Zusatzsteuerventileinrichtung nach Anspruch 6, wobei der Bund Teil einer Ankerplatte (62) ist, die in eine die Offenstellung des Ventilglieds (46) definierende Anlage an einer Polfläche eines im Strömungskörper (36) angeordneten Elektromagneten (58) und in Anlage an einer Polfläche eines im Strömungskörper angeordneten Schließelektromagneten (60) bewegbar ist.

9. Zusatzsteuerventileinrichtung nach Anspruch 8, wobei ein weiterer Schließmagnet (64) im Bereich des Ventilsitzes (50) im Einlasskanalkörper (30) angeordnet ist, mittels dessen zumindest teilweise der aus magnetisierbarem Material bestehende Hut (48) des Ventilglieds (46) in Schließstellung haltbar ist.

10. Zusatzsteuerventileinrichtung nach Anspruch 8, wobei der Hut (48) des pilzförmigen Ventilgliedes (46) axial verschiebbar an dem Schaft (44) gehalten und von zwei gegensinnig zwischen dem Schaft und dem Hut wirkenden Federn (66,68) in eine Mittelstellung vorgespannt ist.

11. Zusatzventileinrichtung nach Anspruch 10, wobei der Hut (48) mittels eines in einem an den Ventilsitz (50) angrenzenden Bereich des Einlasskanalkörpers (30) angeordneten Elektromagneten (64) in Anlage am Ventilsitz und mittels eines im stromaufwärtigen Endbereich des Strömungskörpers (36)angeordneten Elektromagneten (70) in Offenstellung haltbar ist.

12. Zusatzsteuerventileinrichtung nach Anspruch 7, 8, 9 oder 11, wobei die Polflächen der einander entsprechenden, in Öffnungs- oder Schließrichtung wirkenden Elektromagneten (58,60;64,70) annähernd gleichen radialen Abstand von der Strömungsachse (A-A) haben.

## Claims

1. Supplemental control valve device disposed in an intake channel of an internal combustion engine, comprising:
a region (32, 34) of the intake channel (16) that enlarges in the flow direction and, after a widest point, tapers, wherein the initial portion of the enlargement region forms a valve seat (50),
a body (36) retained in the enlarging and then tapering region such that an annular flow-through cross section (40) is formed between the body and the enlarging and tapering region and
a valve member (46) movably guided in the body substantially co-axially to the flow direction, which valve member in its open position forms a portion of the surface of the body that faces the flow and in its closed position abuts on the valve seat,
**characterized in that**:
the body is formed as a streamlined flow body (36), whose profile is attuned to the enlarging and tapering region (32, 34) such that the annular flow through cross-section does not step-wise change in the flow direction and such that the valve member (46) extends flush with the surface of the flow body in the open position.

2. Supplemental control valve device according to claim 1, **characterized in that** the flow body (36) terminates in a cone point in the area of the tapering region (34) of the intake channel (16).

3. Supplemental control valve device according to claim 1 or 2, **characterized in that** an actuation device (52, 54, 56, 58, 60, 62) for the valve member (46) is integrated in the flow body (36).

4. Supplemental control valve device according to one of claims 1 to 3, **characterized in that** the valve member (46) is biased towards an intermediate position by spring force in both directions such that it is capable of oscillating between the open position and the closed position, wherein the valve member is retained in the open position and the closed position by magnetic force.

5. Supplemental control valve device according to one of claims 1 to 4, wherein the valve member (46) is mushroom-shaped as a whole and includes a shaft (44) guided in the flow body (36) and a cap (48), whose convex outer side abuts on the valve seat (50) in the closed position and forms a part of the surface of the flow body (36) in the open position.

6. Supplemental control valve device according to claim 5, wherein a collar (52) is formed on the shaft (44) and a spring (54, 56) is disposed on each side of the collar, each spring being supported on the collar and the flow body.

7. Supplemental control valve device according to claim 6, wherein the cap (48) of the mushroom-shaped valve member (46) is retainable in abutment on the valve seat by means of an electromagnet (60) disposed in a region of the intake channel body (30) that is adjacent to the valve seat (50) and is retainable in the open position by means of an electromagnet (58) disposed in the upstream end region of the flow body (36).

8. Supplemental control valve device according to claim 6, wherein the collar is a part of an anchor plate (62), which is movable into abutment on a pole surface of an electromagnet (58) disposed in the flow body (36), which abutment defines the opening position of the valve member (46), and into abutment on a pole surface of a closing electromagnet (60) disposed in the flow body.

9. Supplemental control valve device according to claim 8, wherein an additional closing magnet (64) is disposed in the intake channel body (30) in the region of the valve seat (50), the cap (48), which is comprised of magnetisable material, of the valve member (46) being at least partially retainable in the closed position by means of the closing magnet.

10. Supplemental control valve device according to claim 8, wherein the cap (48) of the mushroom-shaped valve member (46) is axially-displaceably held on the shaft (44) and is biased into an intermediate position by two opposing springs (66, 68) acting between the shaft and the cap.

11. Supplemental control valve device according to claim 10, wherein the cap (48) is retainable in abutment on the valve seat by means of an electromagnet (64) disposed in a region of the intake channel body (30) adjacent to the valve seat (50) and is retainable in the open position by means of an electromagnet (70) disposed in the upstream end region of the flow body (36).

12. Supplemental control valve device according to claim 7, 8, 9 or 11, wherein the pole surfaces of the corresponding electromagnets (58, 60; 64, 70), which act in the opening- and closing-direction, have substantially the same radial distance from the flow axis (A-A).

## Revendications

1. Soupape de commande additionnelle, agencée dans un canal d'admission d'un moteur à combustion interne à pistons, comportant :
une région (32, 34) qui s'évase en direction d'écoulement et qui se rétrécit après un emplacement le plus large, du canal d'admission (16), la région initiale de la région qui s'évase formant un siège de soupape (50),
un corps (36) retenu dans la région qui s'évase et qui se rétrécit ensuite, de telle sorte qu'une section transversale annulaire d'écoulement traversant (40) est réalisée entre le corps et la région qui s'évase et qui se rétrécit, et
un élément de soupape (46) guidé de manière mobile dans le corps de manière approximativement coaxiale à la direction d'écoulement, lequel élément de soupape forme dans la position d'ouverture une zone de la surface du corps qui est tournée vers l'écoulement et qui, dans la position de fermeture, est en appui sur le siège de soupape,
**caractérisée en ce que**
le corps est réalisé sous forme de corps d'écoulement (36) de forme aérodynamique dont la section transversale est adaptée à la région (32, 34) qui s'évase et qui se rétrécit, de telle sorte que la section transversale annulaire d'écoulement traversant ne se modifie pas de façon abrupte en direction d'écoulement et **en ce que** dans la position d'ouverture, l'élément de soupape (46) s'étend en affleurement avec la surface du corps d'écoulement.

2. Soupape de commande additionnelle selon la revendication 1, **caractérisée en ce que** le corps d'écoulement (36) se termine en une pointe dans la zone de la région (34) qui se rétrécit du canal d'admission (16).

3. Soupape de commande additionnelle selon la revendication 1 ou 2, **caractérisée en ce qu'**un dispositif d'actionnement (52, 54, 56, 58, 60, 62) pour l'élément de soupape (46) est intégré dans le corps d'écoulement (36).

4. Soupape de commande additionnelle selon l'une des revendications 1 à 3, **caractérisée en ce que** l'élément de soupape (46) est précontraint par force de ressort des deux côtés dans une position médiane, de telle sorte qu'il peut osciller entre la position d'ouverture et la position de fermeture, l'élément de soupape étant maintenu dans la position d'ouverture et dans la position de fermeture par force magnétique.

5. Soupape de commande additionnelle selon l'une des revendications 1 à 4, dans laquelle l'élément de soupape (46) est dans l'ensemble en forme de champignon et présente un fût (44) guidé dans le corps d'écoulement (36) et un chapeau (48) dont la face extérieure convexe est en appui sur le siège de soupape (50) en position de fermeture et forme une partie de la surface du corps d'écoulement (36) en position d'ouverture.

6. Soupape de commande additionnelle selon la revendication 5, dans laquelle une collerette (52) est réalisée sur le fût (44), et sur chaque côté de la collerette est agencé un ressort (54, 56) qui prend appui sur la collerette et sur le corps d'écoulement.

7. Soupape de commande additionnelle selon la revendication 6, dans laquelle le chapeau (48) de l'élément de soupape (46) en forme de champignon peut être maintenu en appui sur le siège de soupape au moyen d'un électroaimant (60) agencé dans une région du corps de canal d'admission (30) adjacente au siège de soupape (50), et peut être maintenu en position d'ouverture au moyen d'un électroaimant (58) agencé dans la région terminale amont du corps d'écoulement (36).

8. Soupape de commande additionnelle selon la revendication 6, dans laquelle la collerette fait partie d'une plaque d'induit (62) qui peut être déplacée jusque dans une position d'appui, définissant la position d'ouverture de l'élément de soupape (46), sur une surface polaire d'un électroaimant (58) agencé dans le corps d'écoulement (36) et dans une position d'appui sur une surface polaire d'un électroaimant de fermeture (60) agencé dans le corps d'écoulement.

9. Soupape de commande additionnelle selon la revendication 8, dans laquelle un autre aimant de fermeture (64) est agencé dans la région du siège de soupape (50) dans le corps de canal d'admission (30), au moyen duquel le chapeau (48) réalisé en matériau magnétisable de l'élément de soupape (46) peut être maintenu au moins en partie en position de fermeture.

10. Soupape de commande additionnelle selon la revendication 8, dans laquelle le chapeau (48) de l'élément de soupape (46) en forme de champignon est maintenu sur le fût (44) de manière à pouvoir être déplacé axialement et est précontraint jusque dans une position médiane par deux ressorts (66, 68) agissant en sens opposé entre le fût et le chapeau.

11. Soupape de commande additionnelle selon la revendication 10, dans laquelle le chapeau (48) peut être maintenu en appui sur le siège de soupape au moyen d'un électroaimant (64) agencé dans une région du corps de canal d'admission (30) qui est adjacente au siège de soupape (50), et qui peut être maintenu en position d'ouverture au moyen d'un électroaimant (70) agencé dans la région terminale amont du corps d'écoulement (36).

12. Soupape de commande additionnelle selon la revendication 7, 8, 9 ou 11, dans laquelle les surfaces polaires des électroaimants (58, 60; 64, 70) correspondant l'un à l'autre et agissant en direction d'ouverture ou en direction de fermeture sont approximativement à la même distance radiale de l'axe d'écoulement (A-A).
